# EUROPEAN PATENT APPLICATION

(11) **EP 0 982 958 A2**
(43) Date of publication of application: **01.03.2000**
(21) Application number: 99306466.6
(22) Date of filing: 17.08.1999
(51) Int. Cl.: H04Q 7/32

(54) **Method for protecting mobile anonymity**

(30) Priority: 28.08.1998 US 141582
(71) Applicant: LUCENT TECHNOLOGIES INC., Murray Hill, New Jersey 07974-0636 (US)
(72) Inventor: Patel, Sarvar, Montville, NJ 07045 (US)
(74) Representative: Buckley, Christopher Simon Thirsk

(57) **Abstract**

In the method for protecting mobile anonymity, the network sends a temporary mobile identifier (TID) update request to the mobile along with a challenge. In response, the mobile encrypts its permanent ID through public key encryption using the public key of the network, and sends the encryption result to the network. Also, the mobile generates a second challenge, and a first challenge response. The first challenge response is generated by performing a keyed cryptographic function (KCF) on the first and second challenges using a key. The mobile sends the second challenge and the first challenge response to the network with the encrypted permanent ID. After decrypting the permanent ID, the network accesses the key associated with mobile using the permanent ID. Next, using the key, the network authenticates the mobile using the second challenge and the first challenge response. If authenticated, the network calculated a TID for the mobile using the first and second challenges. The network further generates and sends a second challenge response to the mobile. If the mobile authenticates the network based on the second challenge response, then the mobile calculates the TID in the same manner as did the network.

## Description

### Related Applications

The following applications, filed on July 31, 1998, are related to the subject application and are hereby incorporated by reference in their entirety: application no. unknown entitled METHOD FOR TWO PARTY AUTHENTICATION AND KEY AGREEMENT by the inventor of the subject application, application no. unknown entitled METHOD FOR UPDATING SECRET SHARED DATA IN A WIRELESS COMMUNICATION SYSTEM by the inventor of the subject application; application no. unknown entitled METHOD FOR TRANSFERRING SENSITIVE INFORMATION USING INTIALLY UNSECURED COMMUNICATION by the inventor of the subject application; application no. unknown entitled METHOD FOR SECURING OVER-THE-AIR COMMUNICATION IN A WIRELESS SYSTEM by the inventor of the subject application; and application no. unknown entitled METHOD FOR ESTABLISHING A KEY USING OVER-THE-AIR COMMUNICATION AND PASSWORD PROTOCOL AND PASSWORD PROTOCOL by the inventor of the subject application and Adam Berenzweig.

The following applications, filed concurrently with the subject application, are related to the subject application and are hereby incorporated by reference in their entirety: application no. unknown entitled METHOD FOR DETERMINING TEMPORARY MOBILE IDENTIFIERS AND MANAGING USE THEREOF by the inventor of the subject application and application no. unknown entitled METHOD FOR ESTABLISHING SESSION KEY AGREEMENT by the inventor of the subject application.

### Field of the Invention

The present invention relates to a method for protecting mobile anonymity in a wireless system; and more particularly, for establishing a temporary mobile identifier (TID) when the network fails to recognize the TID of a mobile.

### Description of Related Art

The U.S. currently utilizes three major wireless systems, with differing standards. The first system is a time division multiple access system (TDMA) and is governed by IS-136, the second system is a code division multiple access (CDMA) system governed by IS-95, and the third is the Advanced Mobile Phone System (AMPS). All three communication systems use the IS-41 standard for intersystem messaging, which defines the authentication procedure for call origination, updating the secret shared data, and etc.

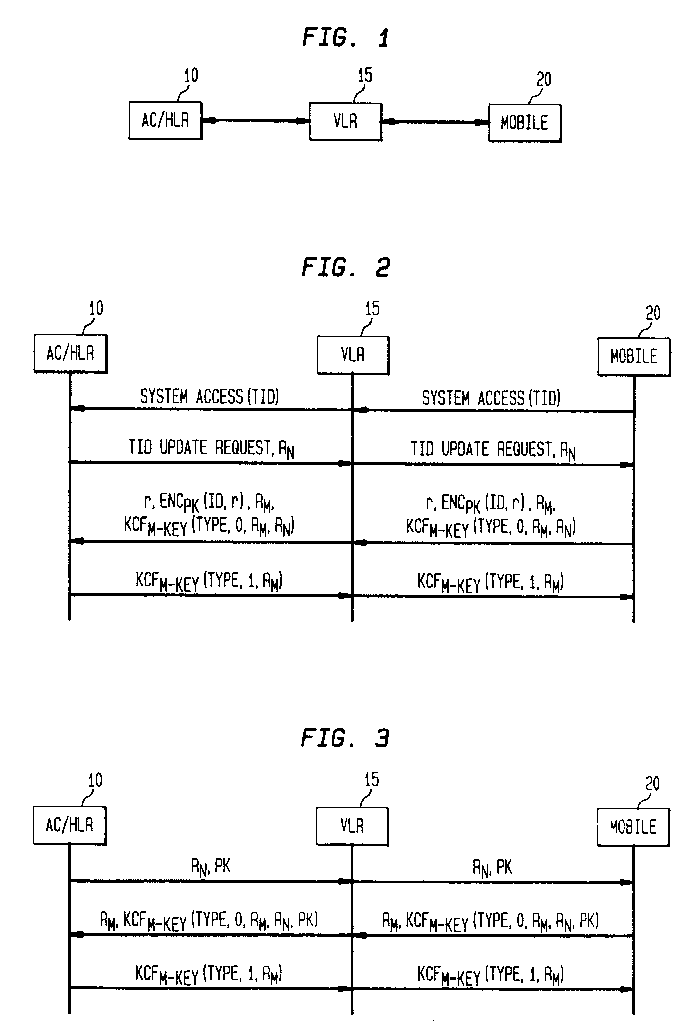

Fig.1 illustrates a wireless system including an authentication center (AC) and a home location register (HLR) 10, a visiting location register (VLR) 15, and a mobile 20. While more than one HLR may be associated with an AC, currently a one-to-one correspondence exists. Consequently, Fig. 1 illustrates the HLR and AC as a single entity, even though they are separate. Furthermore, for simplicity, the remainder of the specification will refer to the HLR and AC jointly as the AC/HLR. Also, the VLR sends information to one of a plurality of mobile switching centers (MSCs) associated therewith, and each MSC sends the information to one of a plurality of base stations (BSs) for transmission to the mobile. For simplicity, the VLR, MSCs and BSs will be referred to and illustrated as a VLR. Collectively, the ACs, HLRs, VLRs, MSCs, and BSs operated by a network provider are referred to as a network.

A root key, known as the A-key, is stored only in the AC/HLR 10 and the mobile 20. There is a secondary key, known as Shared Secret Data SSD, which is sent to the VLR 15 as the mobile roams (i.e., when the mobile is outside its home coverage area). The SSD is generated from the A-key and a random seed RANDSSD using a cryptographic algorithm or function. A cryptographic function is a function which generates an output having a predetermined number of bits based on a range of possible inputs. A keyed cryptographic function (KCF) is a type of cryptographic function that operates based on a key; for instance, a cryptographic function which operates on two or more arguments (i.e., inputs) wherein one of the arguments is the key. From the output and knowledge of the KCF in use, the inputs can not be determined unless the key is known. Encryption/decryption algorithms are types of cryptographic functions. So are one-way functions like pseudo random functions (PRFs) and message authentication codes (MACs). The expression KCF_{SK}(R_{N}') represents the KCF of the random number R_{N}' using the session key SK as the key. A session key is a key that lasts for a session, and a session is a period of time such as the length of a call. In the IS-41 protocol, the cryptographic function used is CAVE (Cellular Authentication and Voice Encryption).

During procedures such as call origination, registration, updating secret shared data, etc. user identity information is transferred from the mobile to the network as part of the communication. User identity information includes, for example, mobile identification numbers (MIN) and/or electronic serial numbers (ESN). For the purposes of discussion, the term permanent ID will be used to cover one or more elements of identity information. However, using the permanent ID allows an attacker to identify and track a mobile; and thus a mobile user. Many mobile users consider this undesirable.

One technique for maintaining mobile anonymity and protecting privacy involves the use of aliases or temporary IDs (TIDs). Once in place, communication takes place using the TID. However, simple uses of anonymity tend to be ineffective in that they permit an attacker to simulate conditions under which the mobile will reveal its true or permanent ID.

Typically, attacks involve blocking part of the communication between a mobile and the network such that the mobile does not confirm an updated TID and resorts to the previous TID while the network has already updated the TID. With out-of-synch updates, the network does not recognize the mobile, and, in order to re-establish communication, the mobile uses its permanent ID. Another situation where the network fails to recognize a mobile's TID occurs if the network crashes. Consequently, an attacker can also simulate a network crash to force a mobile to reveal its permanent ID.

### Summary Of The Invention

In the method for protecting mobile anonymity according to the present invention, the mobile public key encrypts its permanent ID and sends the encrypted permanent ID to the network in response to a TID update request from the network. With the TID update request, the mobile also receives a first challenge, and generates a first challenge response thereto by performing a keyed cryptographic function on the first challenge and a second challenge, which the mobile generates, using a key. The first challenge response and the second challenge are sent to the network. By decrypting the permanent ID of the mobile, the network can access the key by which the first challenge response was created, and authenticated the mobile.

Once the mobile is authenticated, the network calculates a TID for the mobile based on the first and second challenges. The network also generates a second challenge response based on the second challenge, and sends the second challenge response to the mobile. The mobile authenticates the network based on the second challenge response. Once the network is authenticated, the mobile calculates the TID based on the first and second challenges in the same manner as did the network. As part of this procedure, the network may also transfer a new public key to the mobile.

Because the permanent ID of the mobile is transferred to the network though public key encryption, the permanent ID of the mobile is protected from attack. Therefore, whether the result of an attack or system error, if the network fails to recognize the TID of a mobile, the permanent ID of the mobile will not be revealed.

### Brief Description Of The Drawings

The present invention will become more fully understood from the detailed description given below and the accompanying drawings which are given by way of illustration only, wherein like reference numerals designate corresponding parts in the various drawings, and wherein:
Fig. 1 illustrates a conventional wireless system;
Fig. 2 illustrates the communication between a mobile and the network to establish a TID for the mobile according to the method of the present invention; and
Fig. 3 illustrates the communication between the mobile and the network to update the public key of the network according to the method of the present invention.

### Detailed Description Of The Preferred Embodiments

The method for establishing a temporary mobile identifier (TID) according to the present invention will be described with reference to the wireless system of Fig. 1. The method according to the present invention involves transferring the permanent ID of the mobile 20 to the network, but this disclosure is protected using public key encryption.

Public key encryption is asymmetric encryption, while private key encryption, for example, is symmetric encryption. In symmetric encryption, knowledge of the encryption algorithm and the private key permits decryption. By contrast, in public key encryption, even with knowledge of the encryption algorithm and the public key, decryption is not possible. Instead, a decryption key associated with the public key must be known in order to decrypt information encrypted using public key encryption. Accordingly, in the method according to the present invention, only the AC/HLR 10 associated with the mobile 20 stores and has knowledge of the decryption key associated with the public key.

In addition to the A-key, the AC/HLR 10 and the mobile 20 store secondary keys referred to as an M-key and a T-key, both generated based on the A-key. The M-key and T-key are generated by applying a pseudo random function (PRF) indexed by the A-key on a value known to the network and the mobile 20. A practical PRF is the well-known Data Encryption Standard-Cipher Block Chaining (DES-CBC) algorithm from NIST (National Institute of Standards). In a preferred embodiment, DES-CBC, indexed by the 64-bit A-key on a first known value, produces a 64-bit M-key, and DES-CBC, indexed by the 64-bit A-key on a second known value, produces a 64-bit T-Key.

Referring to Fig. 2, the method for establishing a TID according to the present invention will be described. As shown, the VLR 15 acts as a conduit for communication between the AC/HLR 10 and the mobile 20. More specifically, the method for establishing a TID according to the present invention is performed between the AC and the mobile 20. Suppose the mobile 20 attempts a system access. When the mobile 20 attempts a system access and the AC/HLR 10 fails to recognize the TID included in the system access, such as when the network crashes or an out-of-synch condition exists, the AC/HLR 10 will not process the system access. Instead, the AC/HLR 10 generates a random number RN as a challenge, and sends a TID update request and the random number RN to the mobile 20. For ease of identification, random numbers generated as challenges by the network will be referenced as R_{N}, while random numbers generated as challenges by the mobile 20 will be referenced as R_{M}.

In response to the TID update request, the mobile 20 generates a random number r, and public key encrypts the permanent ID for the mobile 20 and the random number r using the public key PK of the network. This encryption is represented by ENC_{PK}(ID, r). The encryption algorithm ENC used preferably is a fast public key encryption algorithm such as the Rabin or RSA algorithm with low exponential; although, any public key encryption algorithm can be used. The random number r is encrypted along with the public key so that the encryption result will be different for each challenge. Otherwise, an attacker could mount an attack using the encryption result. Encrypting the public key with the random number r is a form of probabilistic encryption. One skilled in the art will appreciate that instead of the form of probabilistic encryption discussed above, any form of probabilistic encryption may be used.

The mobile 20 further generates a random number R_{M} using a random number generator included therein, and performs a keyed cryptographic algorithm or function (KCF) on the random numbers R_{N} and R_{M}, Type data, and id data 0 using the M-key as the key to obtain a challenge response. This calculation is represented as KCF_{M-Key}(Type, 0, R_{M}, R_{N}). Preferably, the KCF is a keyed message authentication code such as HMAC, but could be a PRF such as DES-CBC. The Type data represents the type of protocol being performed; namely, the TID update protocol. Other protocol types include call origination, call termination, and mobile registration. The id data 0 indicates that the communication issued from the mobile. Id data 1, by contrast, indicates that the communication is from the network. The mobile 20 then sends the random number r, the encryption result ENC_{PK}(ID, r), the random number R_{M} and the challenge response of KCF_{M-Key}(Type, 0, R_{M}, R_{N}) to the AC/HLR 10.

The AC/HLR 10 decrypts the encryption result using the random number r and the decryption key associated with the public key of the network to obtain the permanent ID of the mobile 20. The AC/HLR 10 pre-stores the permanent IDs for the mobiles associated therewith, and associates the TID, A-key, secondary keys, and other information for each mobile with the permanent ID. Accordingly, when the AC/HLR 10 receives the permanent ID of the mobile 20, the AC/HLR 10 knows, for example, the secondary keys for the mobile 20.

Because the AC/HLR 10 initiated the TID update protocol with the TID update request, the AC/HLR 10 knows the Type data, and because communication from mobiles include the same id data of 0, this value is known as well. Therefore, using the received random number R_{M}, the AC/HLR 10 calculates KCF_{M-Key}(Type, 0, R_{M}, R_{N}). The AC/HLR 10 then verifies whether the calculated version of KCF_{M-key}(Type, 0, R_{M}, R_{N}) matches the version received from the mobile 20. If a match is found, the AC/HLR 10 authenticates the mobile 20. Once the mobile 20 is authenticated, the AC/HLR 10 calculates the new TID as PRF_{T-Key}(R_{M}, R_{N}); wherein the PRF is preferably DES-CBC. Next, the AC/HLR 10 calculates KCF_{M-Key} (Type, 1, R_{M}) as a challenge response, where 1 is the id data of the network, and sends the calculated challenge response to the mobile 20.

The mobile 20 knows the Type data from the TID update request, and knows that communication from the network includes id data of 1. Accordingly, the mobile 20 calculates KCF_{M-Key}(Type, 1, R_{M}). The mobile 20 then verifies whether the calculated version of KCF_{M-Key}(Type, 1, R_{M}) matches the version received from the AC/HLR 10. If a match is found, the mobile 20 authenticates the network. Once the network has been authenticated, the mobile 20 calculates the new TID as PRF_{T-Key}(R_{M} ,R_{N}) in the same manner as did the AC/HLR 10.

Because the permanent ID of the mobile 20 is transferred to the network though probabilistic public key encryption, the permanent ID of the mobile 20 is protected from attack. Therefore, whether the result of an attack or system error, if the network fails to recognize the TID of a mobile, the permanent ID of the mobile will not be revealed.

As a further alternative, instead of performing the method for establishing a TID according to the present invention when the network fails to recognize a mobile's TID, the method can be performed for each system access by the mobile. By continually updating the TID in this fashion, an attack is that much more difficult to mount.

In describing the method of establishing a TID according to the present invention, it was assumed that the mobile 20 had previously obtained the network's public key. The mobile 20, for instance, may have obtained the public key as part of service provisioning. When a mobile 20 is set up to communicate via a given network (i.e., service provisioning), the A-key and other information are programmed into the mobile 20; typically, at the business offices of the network provider. During this procedure, the public key of the network is given to the mobile 20.

Alternatively, techniques to provision mobiles over-the-air, referred to as OTASP (over the air service provisioning), and to securely transfer sensitive information over-the-air have been established as well. For instance the IS-41 protocol sets forth an OTASP protocol. Any of these techniques could be used to provide the public key of the network to the mobile 20. Preferably, the technique for transferring sensitive information described in one of the Related Application referenced above and hereby incorporated by reference in their entirety is used to provide the public key of the network to the mobile 20.

A network service provider will also want to periodically update the public key. Fig. 3 illustrates a method for updating the public key used for establishing a TID according to the present invention. As shown, the AC/HLR 10 generates a random number R_{N} as a challenge, and sends the random number R_{N} and a new public key PK to the mobile 20.

In response, the mobile 20 generates a random number R_{M}, and performs a KCF on the random numbers R_{N} and R_{M}, Type data, id data 0, and the public key PK using the M-key as the key to obtain a challenge response. This calculation is represented as KCF_{M-Key}(Type, 0, R_{M}, R_{N}, PK). Preferably, the KCF is a keyed message authentication code such as HMAC, but could be a PRF such as DES-CBC. The mobile 20 then sends the random number R_{M} and the challenge response of KCF_{M-Key}(Type, 0, R_{M}, R_{N}, PK) to the AC/HLR 10.

Using the received random number R_{M}, the AC/HLR 10 calculates KCF_{M-Key}(Type, 0, R_{M}, R_{N}, PK). The AC/HLR 10 then verifies whether the calculated version of KCF_{M-Key}(Type, 0, R_{M}, R_{N}, PK) matches the version received from the mobile 20. If a match is found, the AC/HLR 10 authenticates the mobile 20. If the AC/HLR 10 can not authenticate the mobile 20, the AC/HLR 10 re-starts the public key update protocol.

Next, the AC/HLR 10 calculates KCF_{M-Key}(Type, 1, R_{M}) as a challenge response, where 1 is the id data of the network, and sends the calculated result to the mobile 20.

The mobile 20 also calculates KCF_{M-Key}(Type, 1, R_{M}). The mobile 20 then verifies whether the calculated version of KCF_{M-Key}(Type, 1, R_{M}) matches the version received from the AC/HLR 10. If a match is found, the mobile 20 authenticates the network. If the mobile 20 authenticates the network, the mobile 20 updates the public key for the network with the new public key.

The public key update protocol discussed above may be performed as part of the TID update protocol described with respect to Fig. 2. For instance, the new public key is sent by the AC/HLR 10 with the TID update request, and the new public key is used by the mobile 20 to encrypt the permanent ID. Furthermore, the challenge response generated by the mobile 20 includes the new public key as an argument.

The public key update protocol may also be performed as part of other update protocols such as an SSD update protocol.

The invention being thus described, it will be obvious that the same may be varied in many ways. Such variations are not to be regarded as a departure from the spirit and scope of the invention, and all such modifications are intended to be included within the scope of the following claims.

## Claims

1. A method for establishing a temporary mobile identifier (TID) at a mobile, comprising:
a) receiving a first code;
b) generating a second code;
c) public key encrypting a permanent ID for said mobile using a public key of said network;
d) sending said second code and said encrypted permanent ID to said network; and
e) establishing a TID based on said first code.

2. The method of claim 1, wherein
said step a) receives said first code and a TID update request from said network; and
said steps d) and e) are performed in response to said TID update request.

3. The method of claim 1, wherein
said first code is a challenge; and
said step b) generates said second code as a challenge response by performing a keyed cryptographic function on said first code using a key.

4. The method of claim 1, wherein
said first code is a challenge; and
said step b) generates said second code as a challenge response by performing a keyed cryptographic function on said first code and type data using said key, said type data indicating a type of protocol being performed by said network and said mobile.

5. The method of claim 1, further comprising:
f) generating a challenge; and wherein
said step d) sends said challenge, said second code and said encrypted permanent ID to said network.

6. The method of claim 5, further comprising:
g) receiving a challenge response from said network;
h) authenticating said network based on said challenge response; and wherein
said step e) establishes said TID when said step h) authenticates said network.

7. The method of claim 5, wherein said step e) establishes said TID based on said challenge and said first code.

8. The method of claim 1, wherein said step a) receives said first code and a public key from said network.

9. The method of claim 8, wherein said step b) generates said second code by performing a keyed cryptographic function on said first code and said public key using a key.

10. A method for establishing a temporary mobile identifier (TID) at a network, comprising:
a) receiving a first, second and third code from a mobile, said third code being a public key encryption of a permanent ID for said mobile using a public key of said network;
b) decrypting said third code to obtain said permanent ID of said mobile;
c) accessing a key associated with said mobile and stored by said network based on said decrypted permanent ID for said mobile;
d) authenticating said mobile based on said key and said second code; and
f) establishing a TID for said mobile based on said first code if said mobile is authenticated.

11. The method of claim 10, further comprising:
g) sending a first challenge to said mobile; and wherein
said step a) receives a challenge response to said first challenge as said second code.

12. The method of claim 11, wherein said step a) receives a second challenge as said first code.

13. The method of claim 12, wherein said step f) establishes said TID based on said first and second challenges.

14. The method of claim 11, wherein said challenge response is a result of performing a keyed cryptographic function on said first code and said first challenge using a key.

15. The method of claim 11, wherein said challenge response is a result of performing a keyed cryptographic function on said first code and type data using a key, said type data indicating a type of protocol being performed by said network and said mobile.

16. The method of claim 11, wherein said step g) sends a new public key for said network and said challenge to said mobile.

17. The method of claim 16, wherein said challenge response is a result of performing a keyed cryptographic function on said first code and said new public key using a key.

18. The method of claim 11, wherein said step g) sends a TID update request and said challenge.
